# EUROPEAN PATENT APPLICATION

(11) **EP 4 555 866 A1**
(43) Date of publication of application: **21.05.2025**
(21) Application number: 23425061.1
(22) Date of filing: 16.11.2023
(51) Int. Cl.: A22C 21/06, A22C 25/14, C12M 1/00

(54) **BILE COLLECTION SYSTEM AND METHOD**

(71) Applicant: ICE S.p.A., 15060 Basaluzzo (AL) (IT)
(72) Inventor: Minutti, Cesar Augusto, 42122 Reggio Emilia (IT)
(74) Representative: Mathys & Squire

(57) **Abstract**

There is described a bile collection system comprising one or more collection tanks arranged to receive material from an inlet of the bile collection system, the collection tanks being arranged to transfer the material to a separating structure of the bile collection system, the separating structure being arranged to separate liquid bile from solid material; a conveying mechanism for transferring the solid material away from the separating structure; and a container for receiving the bile.

## Description

### Field of the invention

The present invention relates to a bile collection system as well as a method of operating a bile collection system. In particular, the invention relates to an automated system for efficiently extracting fresh bile from animals such as poultry (e.g. chickens and turkeys) or fish (e.g. Atlantic Salmon, Coho Salmon and Rainbow Trout).

### Background to the Disclosure

Bile is a biologically complex fluid that serves as a fundamental component of the digestive process in animals, such as poultry, fish and mammals. It plays an important role in emulsifying fats, facilitating their digestion, enabling the absorption of fat-soluble vitamins and also working as a conduit for the elimination of waste products from the body. The composition of bile comprises vital constituents such as mix of acids, cholesterol, bilirubin, enzymes and phospholipids, all of which are indispensable for its diverse physiological functions.

In addition to providing a pivotal role in the physiology of these animals, bile is also very important for the industry, with applications spanning pharmaceuticals, cosmetics and food production, extending beyond its role in animal physiology.

Conventional methods for extracting bile from poultry depend on manual procedures, in which workers pierce animal parts such as the gallbladder to promote the flow of liquid bile out of these animal parts. This approach is labour intensive, susceptible to human error, and also poses a risk of injury to the worker. Moreover, the manual manipulation of the gallbladder poses a notable risk of contaminating the bile.

Therefore, an improved solution for the collection of bile is desired.

### Summary of the Disclosure

According to at least one aspect of the present disclosure, there is described a bile collection system comprising: one or more collection tanks arranged to receive material from an inlet of the bile collection system, the collection tanks being arranged to transfer the material to a separating structure of the bile collection system, the separating structure being arranged to separate liquid bile from solid material; a conveying mechanism for transferring the solid material away from the separating structure; and a container for receiving the bile.

Preferably, the bile collection system comprises a serial arrangement of collection tanks in which a first collection tank is arranged to transfer material to a second collection tank.

Preferably, the first collection tank is arranged to transfer the material to the second collection tank when a threshold level of material in the first collection tank is reached.

Preferably, the first collection tank is arranged to continuously receive material via the inlet, and the second collection tank is arranged to periodically transfer the material to the separating structure.

Preferably, the second collection tank (and/or a final collection tank) is arranged to transfer material to the separating structure when a threshold level of material is reached in the second collection tank.

Preferably, the bile collection system comprises means for (e.g. a processor and/or a level sensor for): determining that a level of material in the second collection tank has reached a first threshold; closing a separating valve connecting the first collection tank to the second collection tank; and opening an exit valve connecting the second collection tank to the separating structure.

Preferably, the bile collection system comprises means for (e.g. a processor and/or a level sensor for): determining thereafter that a level of material in the second collection tank has fallen below a second threshold; closing an exit valve connecting the second collection tank to the separating structure; and opening the valve connecting the first collection tank to the second collection tank.

Preferably, the bile collection system comprises means for (e.g. a processor and/or a level sensor for): determining that a level of material in the first collection tank has reached a first threshold; opening a valve connecting the first collection tank to a second collection tank; determining thereafter that a level of material in the first collection tank has fallen below a second threshold; and closing the valve connecting the first collection tank to a second collection tank.

Preferably, the bile collection system comprises a combined separating and conveying structure that comprises both the separating structure and the conveying mechanism. Preferably, the combined structure comprises a mesh conveyor belt and/or a stainless steel (e.g. mesh) conveyor belt.

Preferably, the one or more collection tanks are contained in a first stage (or module) of the bile collection system. Preferably, the separating structure and the conveying mechanism are contained in a second stage (or module) of the bile collection system. Preferably, the container is contained in a third stage (or module) of the bile collection system.

Preferably, each stage of the bile collection system is located in a different holding structure (and/or module). Preferably, each stage of the bile collection system can be disconnected from the other stages to enable the removal of said stage.

Preferably, the separating structure comprises a mesh. Preferably, the mesh comprises apertures for the passage of liquid.

Preferably, the bile collection system comprises a pump for extracting air from one or more of the collection tanks so as to draw material into the collection tanks. Preferably, the pump is arranged to extract air from a first collection tank of the one or more collection tanks.

Preferably, one or more of the collection tanks comprises a level sensor for determining a level of material in said collection tank.

Preferably, the bile collection system comprises a pump for drawing material through the inlet.

Preferably, a first collection tank of the plurality of collection tanks comprises: an inlet valve; and an outlet valve; wherein a computer device of the bile collection system is arranged to close the inlet valve and the outlet valve and to operate a pump so as to provide a low pressure in the first collection tank and draw material into the first collection tank.

Preferably, the separating structure comprises a strainer and/or a filter.

Preferably, the conveying mechanism comprises a conveyor belt.

Preferably, a speed of the conveying mechanism is dependent on one or more of: a collection rate of bile; and a desired output.

Preferably, the bile collection system comprises a brush and/or a scraper for cleaning the conveying mechanism.

Preferably, the bile collection system comprises a pump, preferably a centrifugal pump, for transferring the liquid from the container to a further container. Preferably, the further container is removable from the bile collection system and/or is external to a housing of the bile collection system.

Preferably, the bile collection system comprises a compressor and/or a preservative for storing the collected bile.

Preferably, the inlet is arranged to receive material from an evisceration line of a slaughterhouse.

Preferably, the bile collection system comprises a housing. Preferably, the housing is a sealable, closeable, and/or sterile housing. Preferably, the first stage, the second stage, and the third stage of the bile collection system are located within the housing. Preferably, the housing comprises one or more holding structures for removably mounting the first stage, the second stage, and/or the third stage.

Preferably, the bile collection system comprises a piercing structure for piercing material.

Preferably, the separating structure comprises an active filtration system.

Preferably, the bile collection system is a bile collection system for collecting bile from animals, and/or from poultry (e.g. chickens and turkeys), and/or from fish (e.g. Atlantic Salmon, Coho Salmon and Rainbow Trout).

Preferably, the material comprises one or more of: animal parts; poultry parts; and poultry gallbladders.

According to an aspect of the present disclosure, there is described a slaughterhouse comprising the aforesaid bile collection system.

Preferably, the slaughterhouse comprises an evisceration line, wherein the inlet of the bile collection system is arranged to receive material from the evisceration line.

According to an aspect of the present disclosure, there is described a method of operating a bile collection system, the method comprising: providing material, via an inlet, to one or more collection tanks of the bile collection system; transferring the material from the collection tanks to a separating structure of the bile collection system, the separating structure being arranged to separate liquid bile from solid material; and transferring the solid material away from the separating structure using a conveying mechanism; and receiving the bile at a container the bile collection system.

Preferably, transferring the material from the collection tanks to the second stage comprises: closing an exit valve between the second collection tank and the separating structure; opening a separating valve between a first collection tank and a second collection tank; operating a pump so as to draw material into the first collection tank and the second collection tank (e.g. operating a pump so as to extract air from the first collection tank and the second collection tank, thereby drawing the material into the first collection tank and the second collection tank); determining that a threshold level of material has been reached in the second collection tank; closing the separating valve; and opening the exit valve, thereby to cause the transfer of the material from the second collection tank to the separating structure.

Preferably, the method comprises a computer-implemented method.

According to another aspect of the present disclosure there is described a computer-readable storage medium for performing the aforesaid method.

According to another aspect of the present disclosure, there is described a method of manufacturing the aforesaid bile collection system.

Preferably, the method comprises inserting the collection tanks, the separating structure, and the conveying mechanism into a housing of the bile collection system.

Preferably, the method comprises inserting a first stage, a second stage, and/or a third stage of the bile collection system into separate sections of a housing of the bile collection system.

The present disclosure provides an advanced and automated system of extracting bile from animals.

An objective of this disclosure is to provide a system to extract bile from animals, such as poultry and fish, in a more productive manner than existing systems.

Another objective is to provide a system to extract bile from animals that is simpler to operate than existing systems.

Another objective is to provide a system to extract bile from animals that is easier to maintain than existing systems.

Another objective is to provide a system to extract bile from animals that reduces, minimizes, and/or avoids risk of contamination.

Another objective is to provide a system to extract bile from animals that is safer for the operators than existing systems.

Another objective is to provide a technology to extract bile from animals that reduces the need for manual inputs, and so improves efficiency, via automation and control solutions.

Any feature described as being carried out by an apparatus, an application, and a device may be carried out by any of an apparatus, an application, or a device. Where multiple apparatuses are described, each apparatus may be located on a single device.

Any feature in one aspect of the disclosure may be applied to other aspects of the invention, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure extends to methods and/or apparatus substantially as herein described with reference to the accompanying drawings.

The disclosure will now be described, by way of example, with reference to the accompanying drawings.

### Description of the Drawings

Figures 1a, 1b, and 1c show views of a bile collection system according to the present disclosure.
Figure 2 shows a computer device on which aspects of the present disclosure may be implemented.
Figure 3 shows a method of operating a bile collection system.
Figure 4 shows a method of transferring material from an inlet of the bile collection system to a second stage of the bile collection system.

### Description of the preferred embodiments

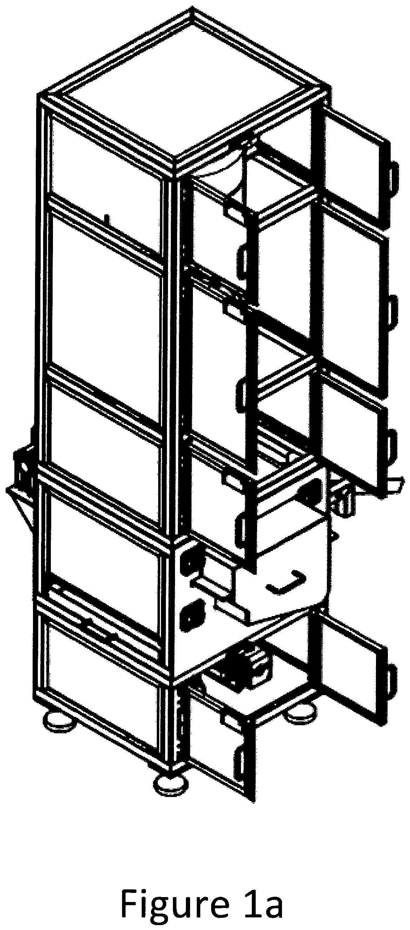

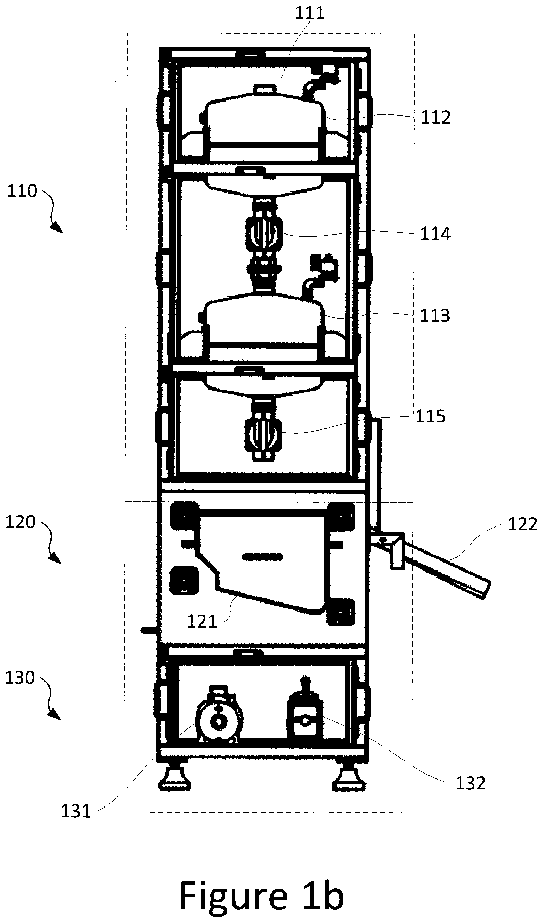

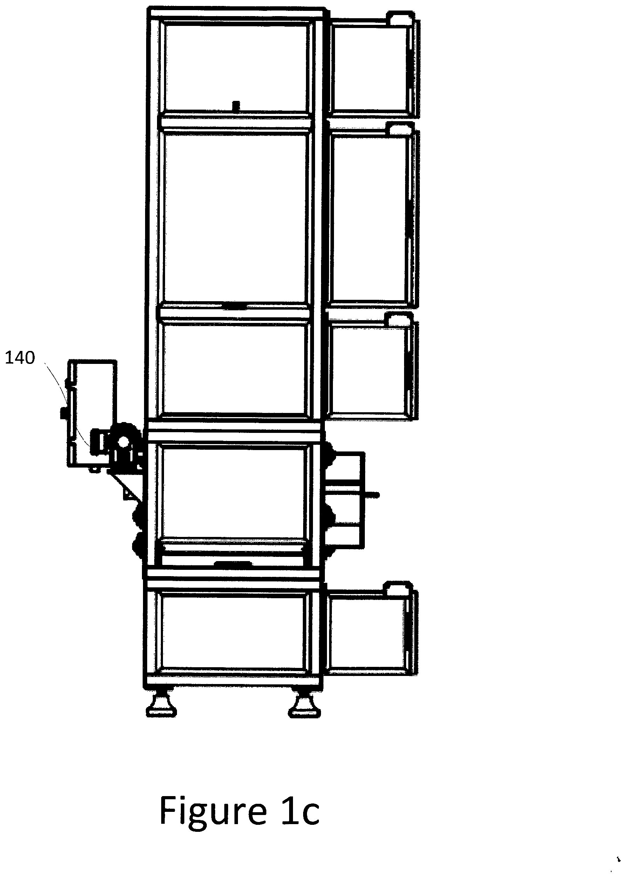

Referring to Figures 1a, 1b, and 1c, there is shown a bile collection system according to the present disclosure. The bile collection system comprises a first stage 110, a second stage 120, and a third stage 130. These stages are arranged so that material entering the bile collection system passes through the first stage, the second stage, and the third stage in order. As shown in Figures 1a - 1c, the stages are arranged with the first stage above the second stage and the second stage above the third stage so that material moves between the stages under the force of gravity. It will be appreciated that other arrangements are possible; for example, the bile collection system may comprise one or more pumps that are arranged to move material between the stages.

The first stage 110 comprises an inlet 111 for receiving material and one or more collection tanks 112, 113 for collecting the received material. Typically, the material comprises animal parts, such as poultry and/or poultry segments (e.g. gallbladders and/or livers of poultry). In this regard, the bile collection system is typically installed in, or suitable for use in, a slaughterhouse, where the inlet of the first stage is arranged to receive material (e.g. chicken parts) from another apparatus of the slaughterhouse. Typically, the inlet is arranged to receive material from an evisceration line of the slaughterhouse.

The bile collection system typically comprises a pump, e.g. a vacuum pump, that is arranged to draw material into the inlet 111. This enables the bile collection system to operate in the absence of an external transfer mechanism.

Each collection tank 112, 113 comprises a sensor, where this sensor typically comprises a level sensor that indicates a level of material present in the collection tank. The level sensor may, for example, be a binary sensor that identifies when the material has reached a certain level and/or the level sensor may provide an indication of the level. The level sensor may, for example, comprise a pressure switch or an infrared sensor or an ultrasonic level sensor. These level sensors allow automatic monitoring of material present in the collection tank, eliminating the need of having human operators visually monitoring it, avoiding the risk of human error and also reducing labor costs.

It will be appreciated that numerous types of sensor may be used in the system, e.g. the sensor may comprise an ultrasonic sensor, a vibrating sensor, a capacitive sensor, a conductive sensor, an electromechanical sensor, a hydrostatic sensor, a free space radar, a guided wave radar, a piezoresistive sensor, a differential pressure sensor, a radiometric sensor, etc. in a specific embodiment, the sensor may comprises a model "LMT 100" sensor for point level detection, where this enables the level of material in one or more collection tanks to be accurately determined.

Typically, the first stage 110 comprises at least a first collection tank 112 and a second collection tank 113, these tanks being separated by a separating valve 114. The separating valve is arranged to operate so as to transfer material from the first collection tank to the second collection tank (typically, this comprises the second collection tank being located beneath the first collection tank so that when the separating valve is opened material from the first collection tank falls into the second collection tank under the force of gravity). The separating valve may operate in dependence on the sensor. In particular, the separating valve may operate so that the separating valve is closed when a level of material in the second collection tank exceeds a threshold level (and thereafter an exit valve 115 separating the second collection tank from the second stage 120 may be opened). Similarly, the separating valve may operate so as to be opened when a level of material in the second collection tank falls below a (different) threshold level.

The first collection tank 112 may be larger than the second collection tank 113, where this can be used to ensure that the first collection tank does not become completely full during the operation of the bile collection system (this first collection tank then provides a buffer that enables the first collection tank to store excess material during periods of high input to the first collection tank so as to provide a steady flow of material to the second collection tank even if the input of material to the first collection tank slows). The first collection tank may, for example, be at least 1.5 times as large, at least twice as large, at least three times as large, and/or at least five times as large as the second collection tank.

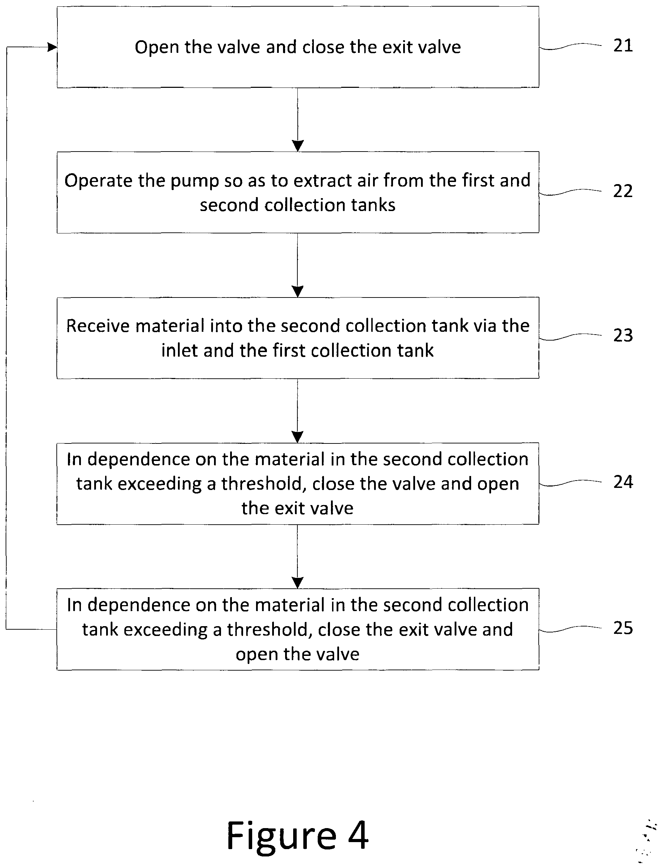

Typically, the separating valve 114 is opened at a first time to enable the transfer of material from the first collection tank 112 to the second collection tank 113 and then, when the amount of material in the second collection tank has reached a threshold level, the separating valve is closed and an exit valve 115 between the second collection tank (or more generally the first stage 110) and the second stage 120 is opened. This enables the material to move from the second tank to the second stage. Then, when the second collection tank is empty, or when the material in this second collection tank has fallen below a threshold level, the exit valve is closed and the separating valve is opened so that the second collection tank once again receives material from the first collection tank. A detailed method for operating the separating valve and the exit valve is described below with reference to Figure 4.

in some embodiments, the separating valve 114 may also, or alternatively, operate in dependence on a level of material in the first collection tank 112.

The use of a plurality of collection tanks 112, 113 is of particular benefit in enabling the installation of the bile collection system in a variety of environments, e.g. slaughterhouses. In this regard, the bile collection system is typically inserted in a specific point of an evisceration line of a slaughterhouse, such as a circuit for removing cut residues from the intestines and gallbladders. It is beneficial to be able to insert the bile collection system at such a point without disturbing the performance of the evisceration line (e.g. while disturbing the working conditions of the line as little as possible). The disclosed system enables such insertion of the bile collection system.

Typically, the suction of material (e.g. of cutting residues) into the first collection tank 112 occurs through vacuum suction (a system, e.g. a pump, for providing suction may be present in the slaughterhouse and/or may be provided as a part of the bile collection system).

By providing the first collection tank 112 and the second collection tank 113, it is possible to continuously provide suction so as to continuously draw material into the first collection tank; this ensures that the provision of the bile collection system does not disturb the operation of an existing evisceration line to which the system is collected. The material in the first collection tank may then be provided to the second collection tank in dependence on a level of material present in the second collection tank and/or the material in the second collection tank may be provided to the second stage 120 in dependence on this level of material in the second collection tank. For example, the second collection tank may transfer material to the second stage (via the exit valve 115) periodically once there is a threshold level of material in the second collection tank.

The second collection tank 113 acts to isolate the operative parts of the bile collection system from the evisceration line. Furthermore, the disclosed method of operation of the second collection tank enables the second stage to receive a consistent quantity of material at regular intervals. In this regard, the exit valve 115 is typically closed while the second collection tank is receiving material from the first collection tank 112 and the separating valve 114 is typically closed while the second collection tank is being emptied and the material is being transferred to the second stage. This regular provision of material enables the same bile collection system to be used within numerous contexts (e.g. with different types of slaughterhouse).

In some embodiments, the separating valve 114 and/or the exit valve 115 comprises a solenoid valve, where these valves can then be operated by a computer device in order to achieve the transfer of material from the first collection tank 112 to the second collection tank 113 and from the second collection tank to the second stage 120. More generally, the valves may comprise any type of valve, e.g. a valve with an electric actuator, a pneumatic actuator, and/or a magnetic actuator.

In some embodiments, the separating valve 114 and/or the exit valve 115 comprises a ball valve with a mechanic actuator (e.g. that is operated by an electric signal). Typically, each valve comprises a full bore valve, where this reduces the risk of the valves becoming clogged as material passes through the valves.

The first stage 110 may comprise any plurality of collection tanks (e.g. at least three collection tanks, and/or at least five collection tanks), where these tanks may be arranged in a serial arrangement (e.g. so that a first collection tank feeds into a second collection tank, which then feeds into a third collection tank) or a parallel arrangement (e.g. where a plurality of separate first collection tanks feed into a plurality of separate, respective, second collection tanks).

In some embodiments, the first stage 110 comprises one or more arrangements of a plurality of collection tanks in series. With such an arrangement, the bile collection system can be installed within an existing environment (e.g. an existing slaughterhouse) without interrupting the operation of that environment, where (for example) a first collection tank of a first tank arrangement and a first collection tank of a second tank arrangement each receive material via respective inlets and then transfer this material to second collection tanks of the respective tank arrangements.

The second stage 120 comprises a separating structure (or mechanism), which separating structure is arranged to separate solids and fluids, typically to separate solids and liquids. The second stage may, for example, comprise a strainer or a filter. The transferring of material to the second stage typically comprises transferring material to this separating structure (e.g. dropping the material onto the separating structure).

The separating structure typically comprises one or more apertures, where liquid is able to pass through these apertures but solid material cannot. The size of the apertures affects the liquid that passes through the apertures, where smaller apertures (e.g. a finer mesh) provides cleaner bile than larger apertures. But smaller apertures are more likely to clog than larger apertures. The size of the apertures typically depends on the use/environment of the bile collection system (where different apertures may be used, for example, for processing different animals).

Typically, the separating structure comprises a mesh (e.g. a stainless steel mesh) with apertures of no more than 5mm, no more than 3mm, and/or no more than 2mm. In a specific embodiment, the mesh comprises apertures of 2mm, where this size of aperture enables the free passage of bile while preventing the mesh from being blocked by waste from a chicken gallbladder.

The separating structure may comprise a plurality of mesh structures, e.g. mesh structures with apertures of decreasing size, where this provides a stepwise filtering process (and this enables a single mesh structure to be removed for cleaning without completely shutting down the bile collection system.

The separating structure and the conveying mechanism 121 may be provided as a combined structure (e.g. the bile collection system may comprise a combined conveying and separating mechanism such as a conveyor belt that comprises a plurality of apertures). It will be appreciated that such an arrangement may be considered to comprise both of a separating structure and a conveying mechanism as well as being considered to comprise a single combined component that is both of a separating structure and a conveying mechanism.

Typically, the second stage 120 comprises a conveying mechanism 121, such as a conveyor belt, that is arranged to move solid material (e.g. chicken parts/skins) away from the separating mechanism. The conveying mechanism may transfer the solid material into a solid container, where this solid material may then be utilized (or removed). Typically, the conveying mechanism comprises a continuous mechanism (e.g. a looped belt) to enable continuous operation of the bile collection system. The conveying mechanism may transfer the solid material to a solid material outlet 122, which transfers the solid material away from the bile collection system. The continuous operation of the bile collection system (e.g. the possibility of continuously/regularly providing material and continuously conveying material) provides an increase in productivity (relative to a non-continuous system).

It will be appreciated that numerous types of conveying mechanism 121 are possible, and that, as has been mentioned above, the separating structure 122 and the conveying mechanism may be combined. For example, the conveying mechanism may comprise a rotating filter (e.g. a rotating drum that comprises apertures) that simultaneously separates solids from liquids and moves the solids away from the second stage.

The speed of the conveying mechanism 121 may be set by a user of the bile collection system (e.g. using a dial). Equally, this speed may be determined (e.g. by a computer device) based on a desired output and/or based on a measured collection rate of liquid/bile. The speed may be determined based on an average collection rate and/or based on the collection rate exceeding and/or falling beneath a threshold value. In this regard, the collection rate falling beneath a threshold value may indicate that the speed of the conveying mechanism can be increased, providing further improvements in productivity, since all of the liquid is being collected before the solid material is transferred out of the second stage.

The speed of operation of the conveying mechanism 121 may depend on the rate of collection of liquid at various sections of the second stage 120. For example, if there is no liquid being collected at a final section (or a penultimate section) of the second stage that is located prior to the solid container, the speed may be increased. Similarly, if a threshold amount of liquid is being collected at the final collection, the speed may be decreased. This alteration of speed may occur automatically and/or continuously.

Typically, the conveying mechanism 121 is arranged to move at a speed of between 0 m/s and 1 m/s and/or between 0 m/s and 0.5 m/s.

Typically, the conveying mechanism 121 is driven by a gearmotor 140 operated by a Programmable Logic Controller (PLC); however, the speed could also be controlled using an induction motor driven by a frequency inverter or by any other similar drive and control system. The gearmotor 140 (or more generally the conveying mechanism 121) may be controlled by a frequency inverter by a control dial located in a panel of the bile collection system. This enables an operator of the system to readily control the speed of operation of the system.

The second stage 120 typically comprises a brush and/or a scraper that is arranged to clean the conveying mechanism 121. For example, a conveyor belt of the conveying mechanism may be arranged to pass through an enclosed section and/or pass by a brush.

The bile collection system may more generally comprise a cleaning system, such as a high pressure jet, for automatically washing the components of the bile collection system, such as the tanks and the conveying mechanism 121.

The separating structure is arranged to transfer the liquids to a liquid container of the bile collection system. This transfer typically comprises the liquids passing through a strainer or filter of the separating structure under the force of gravity (where apertures of the filter are sized so as to prevent the passage of solid material). Equally, the material entering the second stage 120 may be forced into the strainer in order to separate liquids from the solid material.

Typically, the third stage 130 (and/or the second stage 120) comprises the liquid container. The liquid container receives the liquid (e.g. the bile) so that this liquid can be collected and then used. The bile collection system (e.g. the second stage and/or the third stage) may comprise a plurality of liquid containers that may be separated in a similar manner to the collection tanks of the first stage (where a first liquid container feeds into a second liquid container once a threshold level of liquid is present in the first liquid container).

Typically, the second stage 120 and/or the third stage 130 comprises a tray that is arranged to hold the liquid temporarily and a longer term storage tank that is arranged to receive liquid from the tray. The bile collection system may comprise a pump 131 (e.g. a centrifugal pump) that is arranged to transfer liquid from the tray to the storage tank. The pump may operate in dependence on a level of liquid in the tank, where the pump is activated by the level of liquid in the tank exceeding a maximum threshold and/or deactivated by the level falling beneath a minimum threshold.

The third stage 130, e.g. the long term storage tank, may comprise a compressor and/or a preservative that simplifies/enables the long term storage of bile (e.g. for a period of weeks).

The third stage 130 may comprise a pump (e.g. a vacuum pump 131) for drawing material into the inlet 111 of the first stage 110 and/or a pump (e.g. a centrifugal pump 132) for transferring the collected liquid (e.g. bile) out of the liquid container.

Typically, the first stage 110, the second stage 120, and the third stage 130 are arranged within a (e.g. enclosed or sealable) housing, which housing may be transparent or translucent. The housing may, for example, comprise an acrylic housing. The housing can be used to provide a sterile control volume in which the device operates. This can be used to ensure that the collected bile is not contaminated by contaminants in the environment of the bile collection system and equally to ensure that the bile collected by the machine does not contaminate other products in the environment.

The housing typically comprises a closeable panel, where this enables the housing to be sealed (to prevent contamination) and then to be opened (e.g. to enable maintenance to be performed on the components of the bile collection system).

The liquid container (e.g. a second liquid container of the bile collection system) may be located externally to the housing, where this container may be connected to the housing via a one-way valve. This enables the sterile removal of liquid (e.g. bile) from the system. Similarly, the solid container may comprise a one-way valve or an airlock structure to enable the sterile transfer of solid material out of the solid container.

The housing may comprise structural supports, such as bracing, and/or may provide holding structures where the other components of the system (e.g. of the first stage 110, the second stage 120, and the third stage 130) can then be inserted into the holding structures. Such an arrangement enables the components of the system to easily be assembled, but also enables these components to be readily removed to maintain and clean the components.

The first stage 110, the second stage 120, and the third stage 130 may be provided as a kit of parts that can be manufactured and/or shipped separately before being assembled.

The three-stage arrangement simplifies maintenance by enabling a single stage to be replaced if a malfunction occurs (with the malfunction stage being swapped out and then repaired separately). Typically, each stage comprises a separate module, where these modules can be separated and assembled quickly and with few (or no) tools. This allows for quick maintenance of the system.

In some embodiments, the bile collection system may receive material that contains bile that is not exposed and is not able to flow out of the material (e.g. the bile may be contained in an intact gall bladder). Therefore, the first stage 110 and/or the second stage 120 may comprise a piercing structure that is arranged to pierce material passing through this stage. Such piercing promotes the flow of liquid bile out of solid animal parts. The piercing structure may comprise a spike or a blade. Equally, the piercing structure may comprise a high pressure fluid jet (e.g. located at the outlet of the first stage). Typically, the bile collection system is arranged to receive material that is already pierced and/or that does not fully enclose the bile).

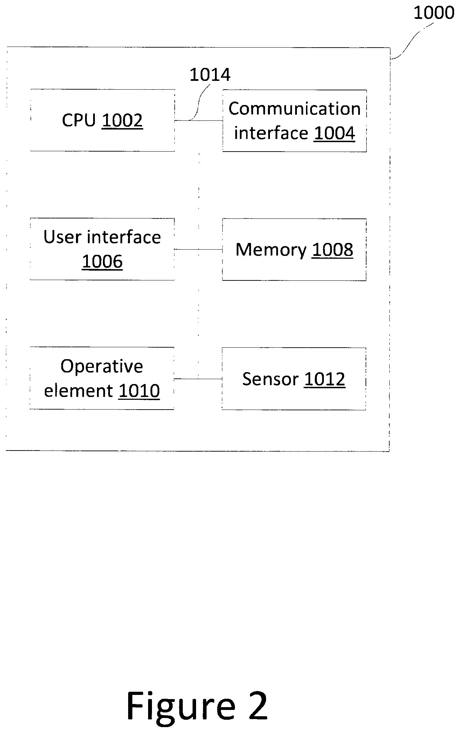

Referring to Figure 2, the bile collection system typically comprises a computer device 1000, which computer device is arranged to control the bile collection system and/or to provide information relating to the operation of the bile collection system. For example, the computer device may coordinate the operation of the various component parts of the bile collection system. This enables the bile collection system to operate automatically, that is without human intervention. Such automatic operation provides increased efficiency as well as reducing the possibility of contamination.

The computer device 1000 typically comprises: a processor in the form of a processor 1002, a communication interface 1004, a user interface 1006, a memory 1008, an operative element 1010, and a sensor 1012. These components are coupled to one another by a bus 1014.

The processor 1002 executes instructions, including instructions stored in the memory 1008, in a storage of the computer device 1000, and/or in a removable storage of the computer device.

The communication interface 1004 enables the computer device 1000 to communicate with other computer devices, e.g. to receive instructions from other computer devices or to transmit sensor readings to other computer devices. The communication interface may comprise a wired communication interface or a wireless communication interface and may, for example, enable communication via one or more of: a local area network, a wide area network, the Internet, Bluetooth^{®}, Infrared, a universal serial bus (USB) interface, or any other type of communication medium.

The user interface 1006 enables a user to interact with the bile collection system. The user interface may comprise one or more buttons (e.g. where operating a button operates a valve and/or sets a speed of operation). Equally, the user interface may comprise a touchscreen or a timer input.

The user interface may comprise a control panel that is located on the bile collection system. For example, the control panel may be built into a panel of the housing of the bile collection system. Equally, (e.g. aspects of) the user interface may be separated from the bile collection system so that the bile collection system can be operated remotely.

The user interface 1006 typically comprises one or more of: an on switch, an off switch, an emergency stop button, a speed control (e.g. for the conveying mechanism), and one or more indicator lights and/or sensor displays.

This user interface provides a simple and user-friendly mechanism for operating the system, thereby facilitating its use by operators and reducing the risk of human error.

It will be appreciated that the bile collection system may comprise only one of the communication interface 1004 and the user interface 1006. Typically, the bile collection system comprises both of the communication interface and the user interface so that a user can interact with the bile collection system directly via the user interface and indirectly (using another computer device) via the communication interface.

The memory 1008 stores instructions and other information for use by the processor 1002. The memory typically comprises one or more of: Random Access Memory (RAM); and Read Only Memory (ROM).

The operative element 1010 comprises one or more elements that are controlled by the computer device. Typically, the operative element comprises one or more valves, conveyance mechanisms, and/or electrical actuators (such as a gear motor 140 that drives the conveying mechanism of the second stage 120 and the centrifugal pump 130 or a vacuum pump 132 of the third stage 130. It will be appreciated that numerous types of operative element may be used within the disclosed system.

The sensor 1012 typically comprises a level sensor, where this sensor enables the computer device to identify a level of material in one or more containers of the bile collection system. Alternatively (or additionally) the sensor may comprise one or more of a temperature sensor, a pressure sensor, a density sensor, a scale, or any other type of sensing element.

A computer program product is provided that includes instructions for carrying out aspects of the method(s) described below. The computer program product may be stored, at different stages, on one or more of: the memory 1006; a storage of the computer device 1000; a removable storage (e.g. a USB drive); and another computer device. The storage of the computer program product is non-transitory, except when instructions included in the computer program product are being executed by the processor 1002, in which case the instructions are sometimes stored temporarily in the processor or memory. The computer program product may be stored on a removable storage device that is removable from the computer device, such that the computer program product may be held separately from the computer device from time to time. Different computer program products, or different aspects of a single overall computer program product, may be present on a plurality of computer devices used by different components of the bile collection system or by different users of the bile collection system.

The above described automation also improves the safety of the system, so as to reduce, minimize and even avoid risk of accidents (as compared to a manually operated system).

The computer device may comprise a microprocessor, such as a Programmable Logic Controller (PLC). More generally, the computer device may comprise any device capable of receiving and transmitting signals so as to control and/or analyse a system. Such components may be located on (e.g. beneath) a control panel of the bile collection system.

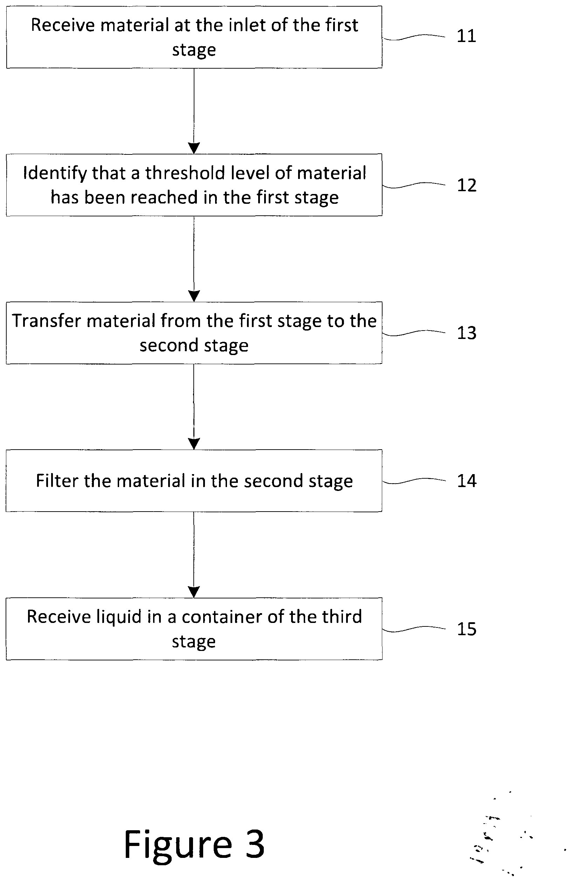

Referring to Figure 3, there is described a method of operating the bile collection system.

In a first step 11, the bile collection system receives material at the inlet 111 of the first stage 110. This first step may comprise passively receiving material (e.g. where material is poured into the inlet). Typically, the first stage comprises operating a suction pump (e.g. a vacuum pump) in order to draw material into the inlet.

In a second step 12, the bile collection system (e.g. the computer device) identifies that a threshold level of material has been reached in a collection tank 112, 113 of the first stage and then in a third step 13 the bile collection system (e.g. the computer device) transfers the material from the first stage 110 to the second stage 120.

The second step 12 may comprise identifying that a threshold level of material has been reached in the second collection tank 113 and thereafter closing the separating valve 114 between the first collection tank 112 and the second collection tank and opening the exit valve 115 between the second collection tank and the second stage 120 so as to transfer material to the second stage.

The second step 12 and the third step 13 may involve: identifying that a first threshold level has been reached in a first collection tank 112 and thereafter transferring the material to the second collection tank 113; and then identifying that a second threshold level has been reached in the second collection tank and thereafter transferring the material to the second stage.

Typically, the computer device 1000 is arranged to close the separating valve 114 once a first threshold level has been reached in the second collection tank 113 and to open the exit valve 115 and then to open the separating valve once the material has been transferred to the second stage 120 and to close the exit valve. The second collection tank 112 may then begin to be filled again via the first collection tank.

The collection tank(s) 112, 113 may be associated with each of a minimum sensor level and a maximum sensor level where the exceeding of a maximum level in a collection tank results in an outlet valve of that tank being opened (and/or an inlet valve of that tank being closed) and the reduction of a material level in a collection tank below a minimum value results in the outlet valve of that tank being closed (and/or an inlet valve of that tank being opened).

In a fourth step 14, the bile collection system filters the material in the second stage 120 so as to separate solid material from liquids. This typically comprises passively filtering the material, where the material is passed over a filter that allows the passage of liquids but blocks the passage of solids. Equally, the fourth step may comprise an active filtration step (e.g. where the bile collection system comprises a pump, such as a vacuum pump, that is used to draw the liquids from the solid material and/or where the material is forced through a filter in order to promote the separation of the liquids from the solid material).

Typically, the fourth step 14 involves operating a conveying mechanism 121 so as to remove the solid material from (e.g. a filter of) the second stage 120. This solid material may then be transferred to a solid container of the bile collection system (and/or the sold material may be removed from the bile collection system).

In a fifth step 15, the bile collection system receives liquid (e.g. bile) in a container of the third stage 130. This fifth step typically comprises a passive step, where the material falls into the container (through the filter) due to the force of gravity. Equally, the bile collection system may comprise a mechanism, such as a pump, for driving the transfer of the liquid.

Once collected, the liquid may then be removed from the bile collection system.

Typically, the collected liquid is initially stored within a temporary reservoir (e.g. the liquid container). This reservoir may comprise a level sensor, wherein the level sensor is arranged to detect when the amount of liquid in the reservoir has reached a threshold level. The level sensor may then initiate the operation of a pump, such as a centrifugal pump, to transfer the liquid out of the liquid container and into an external tank, where this external tank may be external to the bile collection system and/or external to a slaughterhouse in which the bile collection system is located. This method of operation enables the bile collection system to essentially run autonomously, with an operator only needing to occasionally remove and replace the external tank (which external tank is typically located outside of the housing of the bile collection system and/or in an easily accessible enclosure of the bile collection system).

The disclosed systems and methods can be used to provide an efficient, sterile, and easily maintainable and modifiable bile collection system.

Referring to Figure 4, there is described a method of transferring incoming material from the inlet 111 to the second stage 120.

In a first step 21, that typically occurs with the first collection tank 112 and the second collection tank 113 both empty, the separating valve 114 is opened and the exit valve 115 is closed. In a second step 22, the (vacuum) pump is then turned on so as to extract air from both collection tanks. This creates a vacuum (or more generally a low pressure) in both collection tanks.

In a third step 23, material is transferred through the inlet 111 (e.g. from an evisceration line of a slaughterhouse) and this material begins to fill the second collection tank 113 through the first collection tank 112.

The level of the material in the second collection tank 113 increases as the material is transferred through the inlet until it reaches the first threshold and then, in a fourth step 24, the separating valve 114 is closed and the exit valve 115 is opened (with the separating valve typically being closed prior to the opening of the exit valve).

The opening of the separating valve 114, leads to the second collection tank 113 drawing in air from the environment. Once enough air has been drawn in, and the external and internal pressures of the second collection tank (plus the hydrostatic head level of the liquid contained in the second collection tank) are in balance, the material contained in that second collection tank will begin to flow out of the second collection tank and into the second stage 120.

Once the second collection tank has emptied (or once the contents in this tank have fallen below a second threshold), the process is repeated, with the exit valve 115 again being closed and the separating valve 114 being opened.

Throughout this process, the first collection tank 112 remains in the same operating vacuum conditions and so continues to collect the material being transferred through the inlet 111 (e.g. from the evisceration line). Therefore, continuity of work on the line is ensured, without any interruption or variation in operation.

Returning to the first step 21, the exit valve 115 is typically closed before the separating valve 114 is opened so that the material collected in the first collection tank 112 during the emptying of the second collection tank 113 is transferred into the second collection tank.

Typically, the pump is arranged to extract air from the first collection tank 112. Therefore, when the separating valve 114 is open, the pump also extracts air from the second collection tank 113 and then when the separating valve is closed the second collection tank is no longer subject to the extraction of air via the pump. This enables the efficient emptying of the second collection tank once the separating valve is closed and the exit valve 115 is opened.

### Alternatives and modifications

It will be understood that the present invention has been described above purely by way of example, and modifications of detail can be made within the scope of the invention.

For example, while the detailed description has primarily considered the collection of bile from poultry, it will be appreciated that the disclosed system could be used to collect bile from other sources and could be used to collect bile from other animals, or more generally to collect other materials from poultry, animals, or from other sources (e.g. chickens, turkeys, fish, salmon, trout, etc.). In a specific example, the system could be used to collect liquids from recyclable containers. In general, the disclosure extends to a system for collecting fluids.

While the detailed description has primarily considered the use of a conveyor belt and a filter for the second stage it will be appreciated that a number of alternative methods are possible for separating liquids from fluids. For example, the second stage may comprise a centrifuge and/or an evaporator.

While the detailed description has considered a first stage, a second stage, and a third stage, it will be appreciated that these are conceptual stages used primarily for the sake of description. More generally, the bile system comprises one or more collection tanks that transfer material to a separating structure and a conveying mechanism, which separating structure and conveying mechanism separate solids from liquids and transfer the liquids (e.g. bile) to a liquid container. Not least due to this, components described as being in any of the stages may equally be provided in any of the other stages (e.g. the liquid collection tank may be provided in the first stage 110).

The detailed description has primarily described a bile collection system, where the components of this system may be distributed (e.g. a user interface of the system may be remote to the first stage 110, the second stage 120, and the first stage 130). The bile collection system may be implemented as a bile collection apparatus, which apparatus comprises each stage and (optionally) an operating panel, which operating panel may be built into the housing of the operating panel.

Reference numerals appearing in the claims are by way of illustration only and shall have no limiting effect on the scope of the claims.

## Claims

1. A bile collection system comprising:
a plurality of collection tanks arranged to receive material from an inlet of the bile collection system, the collection tanks being arranged to transfer the material to a separating structure of the bile collection system, the separating structure being arranged to separate liquid bile from solid material;
a conveying mechanism for transferring the solid material away from the separating structure; and
a container for receiving the bile;
wherein the plurality of collection tanks comprises a serial arrangement of collection tanks in which a first collection tank is arranged to transfer material to a second collection tank.

2. The bile collection system of claim 1, wherein the first collection tank is arranged to continuously receive material via the inlet, and wherein the second collection tank is arranged to periodically transfer the material to the separating structure.

3. The bile collection system of any preceding claim, wherein the second collection tank is arranged to transfer material to the separating structure when a threshold level of material is reached in the second collection tank.

4. The bile collection of claim 3, comprising means for:
determining that a level of material in the second collection tank has reached a first threshold;
closing a separating valve connecting the first collection tank to the second collection tank; and
opening an exit valve connecting the second collection tank to the separating structure.

5. The bile collection of claim 4, comprising means for:
determining thereafter that a level of material in the second collection tank has fallen below a second threshold;
closing an exit valve connecting the second collection tank to the separating structure; and
opening the separating valve connecting the first collection tank to the second collection tank.

6. The bile collection system of any preceding claim, comprising a combined separating and conveying structure that comprises both the separating structure and the conveying mechanism, preferably wherein the combined structure comprises a mesh conveyor belt, more preferably a stainless steel mesh conveyor belt.

7. The bile collection system of any preceding claim, wherein:
the one or more collection tanks are contained in a first stage of the bile collection system; and/or
the separating structure and the conveying mechanism are contained in a second stage of the bile collection system; and/or
the container is contained in a third stage of the bile collection system;
preferably, wherein each stage of the bile collection system is located in a different holding structure and/or wherein each stage of the bile collection system can be disconnected from the other stages to enable the removal of said stage.

8. The bile collection system of any preceding claim, comprising a pump for extracting air from one or more of the collection tanks so as to draw material into the collection tanks, preferably wherein the pump is arranged to extract air from a first collection tank of the one or more collection tanks.

9. The bile collection system of any preceding claim, wherein one or more of the collection tanks comprises a level sensor for determining a level of material in said collection tank.

10. The bile collection system of any preceding claim, wherein a speed of the conveying mechanism is dependent on one or more of: a collection rate of bile; and a desired output.

11. The bile collection system of any preceding claim, comprising a pump, preferably a centrifugal pump, for transferring the liquid from the container to a further container, preferably wherein the further container is removable from the bile collection system and/or is external to a housing of the bile collection system.

12. The bile collection system of any preceding claim, comprising a housing, preferably wherein:
the housing is a sealable, closeable, and/or sterile housing; and/or
the first stage, the second stage, and the third stage of the bile collection system are located within the housing; and/or
the housing comprises one or more holding structures for removably mounting the first stage, the second stage, and/or the third stage.

13. The bile collection system of any preceding claim, wherein the material comprises one or more of: animal parts; poultry parts; and poultry gallbladders.

14. A method of operating a bile collection system, the method comprising:
providing material, via an inlet, to one or more collection tanks of the bile collection system;
transferring the material from the collection tanks to a separating structure of the bile collection system, the separating structure being arranged to separate liquid bile from solid material; and
transferring the solid material away from the separating structure using a conveying mechanism; and
receiving the bile at a container the bile collection system.

15. The method of claim 14, wherein transferring the material from the collection tanks to the second stage comprises:
closing an exit valve between the second collection tank and the separating structure;
opening a separating valve between a first collection tank and a second collection tank;
operating a pump so as to draw material into the first collection tank and the second collection tank;
determining that a threshold level of material has been reached in the second collection tank;
closing the separating valve; and
opening the exit valve, thereby to cause the transfer of the material from the second collection tank to the separating structure.
